# EUROPEAN PATENT APPLICATION

(11) **EP 4 517 421 A1**
(43) Date of publication of application: **05.03.2025**
(21) Application number: 23796531.4
(22) Date of filing: 28.04.2023
(51) Int. Cl.: G02F 1/15, G02C 7/10, G02F 1/153, G03H 1/02

(54) **ELECTROCHROMIC ELEMENT, EYEGLASS LENS, EYEGLASSES, AND METHOD FOR PRODUCING ELECTROCHROMIC ELEMENT**

(30) Priority: 28.04.2022 JP 2022074757
(71) Applicant: Hoya Lens Thailand Ltd., Pathumthani 12130 (TH)
(72) Inventor: KAWAKAMI, Hironori, Tokyo 160-8347 (JP); MIYAZAKI, Shigeki, Tokyo 160-8347 (JP); KAGA, Tadashi, Tokyo 160-8347 (JP)
(74) Representative: Hoffmann Eitle
(86) International application number: PCT/JP2023/016804
(87) International publication number: WO 2023/210796

(57) **Abstract**

An objective is to provide an electrochromic element in which an apparent undulation can be reduced, a lens for spectacles, spectacles, and a method of producing an electrochromic element. An electrochromic element (10) of the present invention is an electrochromic element in which a lens substrate (1) and an electrochromic film (2) are laminated together, in which an absolute value of a difference between a maximum value and a minimum value of a transmission power in all of a 40 mm × 40 mm range at a center of a surface is 0.30 D or less.

## Description

### [Technical Field]

The present invention relates to an electrochromic element whose coloring and discoloring can be reversibly controlled by electricity, a lens for spectacles, spectacles, and a method of producing an electrochromic element.

### [Background Art]

Electrochromic elements that utilize an electrochromism phenomenon in which a voltage is applied to cause a reversible oxidation-reduction reaction and colors are reversibly changed are used as, for example, lenses for spectacles.

In a process of producing an electrochromic element, for example, an electrochromic film is preformed in a curved surface shape, and subsequently, the electrochromic film is arranged in a mold to injection-mold a lens substrate. The completed electrochromic element has a curved surface shape in which the electrochromic film is laminated on the surface of the lens substrate.

### [Citation List]

### [Patent Literature]

[PTL 1] Japanese Patent Application Publication No. 2022-25243

### [Summary of Invention]

### [Technical Problem]

Incidentally, a heating process, a process of pasting an electrochromic film to a lens substrate or the like at the time of producing an electrochromic element causes an undulation on the surface of the electrochromic element. The undulation appears as a power unevenness or light and dark shading on the surface at the time of coloring the electrochromic element by applying an electric current thereto.

However, in the related art, since undulation was not controlled, the power distribution was likely to be uneven, and for example, when an electrochromic element was applied to spectacles as a lens for spectacles, there was a problem in that the power unevenness became large.

The present invention has been made in order to address the above problem, and an objective of the present invention is to provide an electrochromic element in which an apparent undulation can be reduced, a lens for spectacles, spectacles, and a method of producing an electrochromic element.

### [Solution to Problem]

An electrochromic element in one aspect of the present invention is an electrochromic element in which a lens substrate and an electrochromic film are laminated together, in which an absolute value of a difference between a maximum value and a minimum value of a transmission power in all of a 40 mm × 40 mm range at a center of a surface is 0.30 D or less.

In one aspect of the present invention, it is preferable that the absolute value of the difference between the maximum value and the minimum value of the transmission power in all of the 40 mm × 40 mm range at the center of the surface is 0.15 D or less.

An electrochromic element in one aspect of the present invention is an electrochromic element in which a lens substrate and an electrochromic film are laminated together, in which a surface of the electrochromic film has an undulation, and a rear surface of the lens substrate on a side opposite to a surface on which the electrochromic element is arranged undulates along a shape of the surface.

In one aspect of the present invention, it is preferable that the rear surface of the lens substrate on the side opposite to a side on which the electrochromic film is arranged is polished to undulate along the shape of the surface.

In addition, in one aspect of the present invention, it is preferable that the electrochromic film is arranged on a convex surface of the lens substrate and a concave surface on a side opposite to the convex surface has been polished.

A lens for spectacles in one aspect of the present invention, in which the electrochromic element described above is used. Spectacles in one aspect of the present invention, in which a plurality of the lenses for spectacles described above is used.

One aspect of the present invention is a method of producing an electrochromic element in which a lens substrate and an electrochromic film are laminated together, in which a surface power distribution of the electrochromic element is measured, and a rear surface of the lens substrate on a side opposite to the side on which the electrochromic film is arranged is polished on the basis of a measurement result thereof.

In one aspect of the present invention, it is preferable that the surface power distribution is measured with a reflection power, a polished shape relative to the rear surface is measured on the basis of a reflection power distribution, and the rear surface is polished in accordance with the polished shape.

In one aspect of the present invention, it is preferable that polishing is performed so that an absolute value of a difference between a maximum value and a minimum value of a transmission power in all of a 40 mm × 40 mm range at a center of a surface becomes 0.30 D or less.

In one aspect of the present invention, it is preferable that the production method has a process of forming the electrochromic element, a process of arranging the electrochromic element in a mold to injection-mold the lens substrate, a process of measuring a surface power distribution of the electrochromic element, and a process of polishing the rear surface based on a measurement result of the surface power distribution.

### [Advantageous Effects of Invention]

According to the electrochromic element and the production method thereof of the present invention, it is possible to reduce an apparent undulation and improve the uniformity of the power distribution by adjusting the absolute value of the difference between the maximum value and the minimum value of the transmission power to a predetermined range.

### [Brief Description of Drawings]

[Fig. 1]

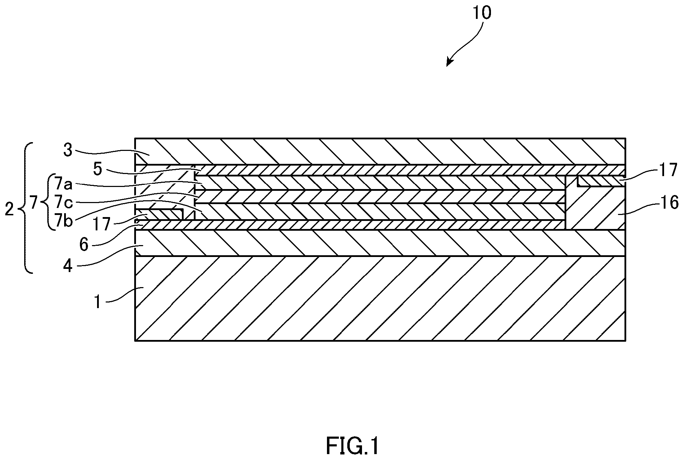

   Fig. 1 is a schematic cross-sectional view of an electrochromic element according to the present embodiment.
[Fig. 2A]

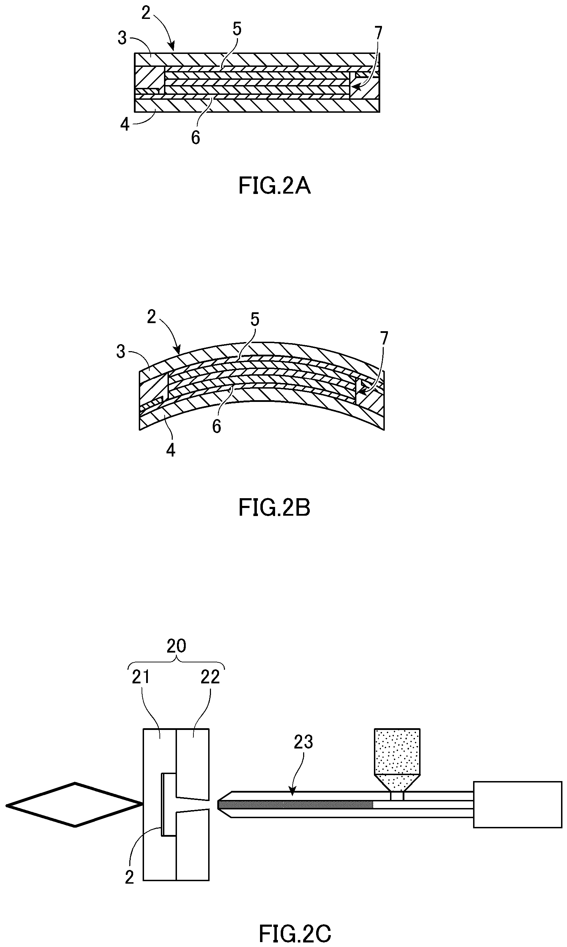

   Fig. 2A is an illustrative diagram showing a process of producing an electrochromic element according to the present embodiment.
[Fig. 2B]
   Fig. 2B is an illustrative diagram showing the process of producing an electrochromic element according to the present embodiment.
[Fig. 2C]
   Fig. 2C is an illustrative diagram showing the process of producing an electrochromic element according to the present embodiment.
[Fig. 2D]

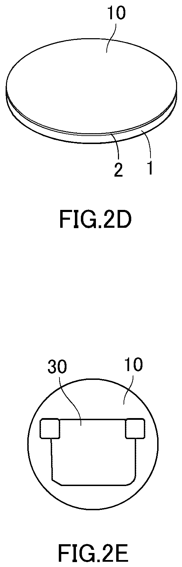

   Fig. 2D is an illustrative diagram showing the process of producing an electrochromic element according to the present embodiment.
[Fig. 2E]
   Fig. 2E is an illustrative diagram showing the process of producing an electrochromic element according to the present embodiment.
[Fig. 3]

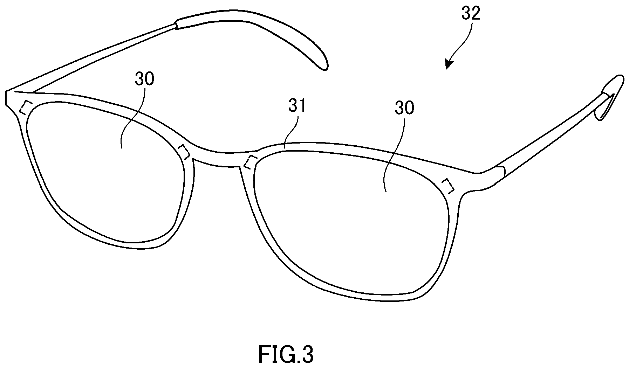

   Fig. 3 is a perspective view of spectacles for which an electrochromic technique is used.
[Fig. 4A]

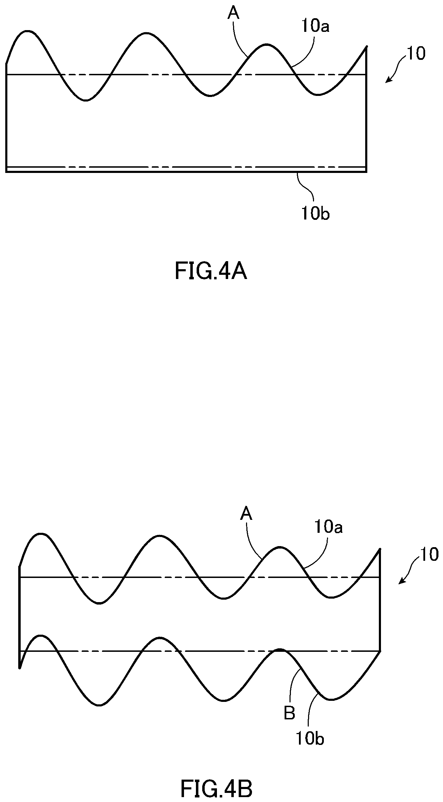

   Fig. 4A is a view conceptually showing undulations on surfaces of a pair of spectacle lenses and shows a comparative example.
[Fig. 4B]
   Fig. 4B is a view conceptually showing undulations on surfaces of a pair of spectacle lenses and shows an example.
[Fig. 5A]

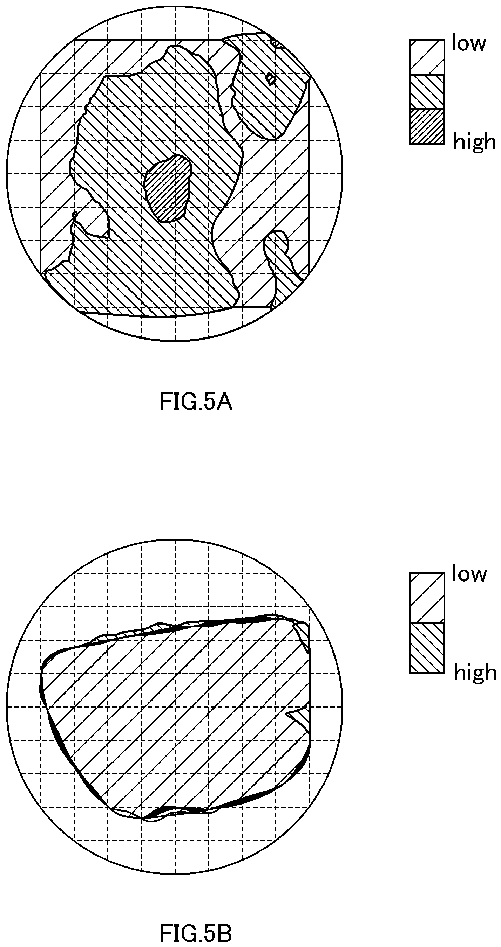

   Fig. 5A is a conceptual view showing a surface power distribution.
[Fig. 5B]
   Fig. 5B is a conceptual view of a spectacle lens showing a transmission power distribution after polishing of a rear surface based on the surface power distribution (reflection power distribution) shown in Fig. 5A.

### [Description of Embodiments]

Hereinafter, a mode for implementing the present invention (hereinafter simply referred to as "the present embodiment") will be described in detail.

### <Electrochromic Element 10 in Present Embodiment>

Fig. 1 is a schematic cross-sectional view of an electrochromic element 10 according to the present embodiment. The electrochromic element 10 includes a lens substrate 1 and an electrochromic film 2 laminated on the surface of the lens substrate 1.

### [Lens Substrate 1]

The lens substrate 1 is required to be transparent and have high transmittance. The material of the lens substrate 1 is not limited, and examples thereof include resin substrates that can be molded in a mold such as a polycarbonate resin, an acrylic resin, an epoxy resin, and a phenolic resin, and glass substrates. Among these, the lens substrate 1 is preferably formed of a polycarbonate resin in consideration of moldability and production cost.

### [Electrochromic Film 2]

The electrochromic film 2 includes a pair of a first substrate 3 and a second substrate 4, a pair of a first electrode layer 5 and a second electrode layer 6 provided on the inner surfaces of the first substrate 3 and the second substrate 4, and an electrochromic layer 7 provided between the first electrode layer 5 and the second electrode layer 6. The electrochromic layer 7 includes a reduction layer 7a arranged on the side of the first electrode layer 5, an oxidation layer 7b arranged on the side of the second electrode layer 6, and an electrolyte layer 7c provided between the reduction layer 7a and the oxidation layer 7b. In this manner, in the electrochromic film 2, the second substrate 4/the second electrode layer 6/the oxidation layer 7b/the electrolyte layer 7c/the reduction layer 7a/the first electrode layer 5/the first substrate 3 are laminated in order from the bottom of Fig. 1. The reference sign 16 indicates a sealing layer, and the reference sign 17 indicates a metal terminal portion.

The substrates 3 and 4 constituting the electrochromic film 2 are in the form of a film or sheet, and can be formed of the same resin material as the lens substrate 1. Like the lens substrate 1, the substrates 3 and 4 are also required to be transparent and have high transmittance. Like the lens substrate 1, the substrates 3 and 4 are preferably formed of a polycarbonate resin.

Properties required for the electrode layers 5 and 6 constituting the electrochromic film 2 include transparency, high transmittance, and excellent conductivity. In order to satisfy such properties, the electrode layers 5 and 6 are transparent electrode layers, and an indium tin oxide (ITO) is particularly preferably used.

For the reduction layer 7a, the oxidation layer 7b and the electrolyte layer 7c constituting the electrochromic layer 7, existing materials can be used.

The reduction layer 7a is a layer that develops colors according to a reduction reaction. For the reduction layer 7a, existing reduced electrochromic compounds can be used. The reduced electrochromic compounds can be an organic substance or an inorganic substance, and are not limited, and examples thereof include azobenzene-based compounds, anthraquinone-based compounds, diarylethene-based compounds, dihydroprene-based compounds, dipyridine-based compounds, styryl-based compounds, styryl spiropyran-based compounds, spirooxazine-based compounds, spirothiopyran-based compounds, thioindigo-based compounds, tetrathiafulvalene-based compounds, terephthalic acid-based compounds, triphenylmethane-based compounds, triphenylamine-based compounds, naphthopyran-based compounds, viologen-based compounds, pyrazoline-based compounds, phenazine-based compounds, phenylenediamine-based compounds, phenoxazine-based compounds, phenothiazine-based compounds, phthalocyanine-based compounds, fluoran-based compounds, fulgide-based compounds, benzopyran-based compounds, and metallocene-based compounds, tungsten oxide, molybdenum oxide, iridium oxide, and titanium oxide.

The oxidation layer 7b is a layer that develops colors according to an oxidation reaction. For the oxidation layer 7b, existing oxidized electrochromic compounds can be used. The oxidized electrochromic compounds can be an organic substance or an inorganic substance, are not limited, and can be selected from, for example, a composition containing a radically polymerizable compound including triarylamine, a Prussian blue type complex, nickel oxide, iridium oxide and the like.

The electrolyte layer 7c has electronic insulation and ionic conductivity and is preferably transparent. The electrolyte layer 7c may be a solid electrolyte, a gel, or a liquid. In order to maintain high ionic conductivity, a gel is preferable. Although not limited, for example, existing electrolyte materials such as inorganic ion salts such as alkali metal salts and alkaline earth metal salts, quaternary ammonium salts and acids can be used.

In addition, while not shown in Fig. 1, a functional layer such as a hard coat layer or an anti-reflection layer can be provided on the surface of the electrochromic film 2.

### <Method of Producing Electrochromic Element in Present Embodiment>

Fig. 2 is an illustrative diagram showing a method of producing an electrochromic element according to the present embodiment.

In Fig. 2A, the electrochromic film 2 having the pair of substrates 3 and 4, the electrode layers 5 and 6 arranged inside of the substrates 3 and 4, and the electrochromic layer 7 interposed between the electrode layers 5 and 6 is prepared. The laminated structure of the electrochromic film 2 is not limited, and may be a laminated structure other than that shown in Fig. 2A.

Next, as shown in Fig. 2B, the electrochromic film 2 is preformed in a curved surface shape. At this time, the electrochromic film 2 is heated. The heating temperature is not limited, and is, for example, about 100°C.

When the electrochromic element of the present embodiment is applied to a lens for spectacles, since the lens for spectacles has a three-dimensional curved surface, it is preferable to preform the electrochromic film 2 into a three-dimensional curved surface before the lens substrate 1 is molded.

Subsequently, in Fig. 2C, the preformed electrochromic film 2 is set in a mold 20 composed of a first die 21 and a second die 22, and the lens substrate 1 is injection-molded using an injection molding machine 23. At the time of the injection molding, heat is applied. The heating temperature is not limited, and is, for example, about 120°C. In Fig. 2C, the inside space of the mold 20 is shown in a rectangular shape, but the inner surface with which the electrochromic film 2 comes into contact or the inner surface on the injection opening side has a curved surface shape.

Next, as shown in Fig. 2D, the electrochromic element 10 in which the lens substrate 1 and the electrochromic film 2 are laminated together is removed from the mold 20, and as shown in Fig. 2E, the electrochromic element 10 is cut into the shape of a lens for spectacles to obtain a lens for spectacles 30.

### <Problems in Conventional Electrochromic Element and Overview of Present Embodiment>

Electrochromic elements are elements that utilize an electrochromism phenomenon in which a voltage is applied to both electrodes to cause a reversible oxidation-reduction reaction and colors are reversibly changed.

For example, spectacles 32 shown in Fig. 3 have electrochromic elements, for which the electrochromic technique is used, combined into a frame 31 as a pair of lenses for spectacles 30, and can function as sunglasses in bright places and clear lenses in dark places. It is possible to adjust the brightness to an optimal level by operating a switch or automatically.

As shown in Fig. 1, the electrochromic element 10 has a laminated structure in which the electrochromic film 2 having the electrode layers and the electrochromic layer is laminated on the surface of the lens substrate 1.

Incidentally, when the electrochromic element was applied to the spectacles 32 as the lens for spectacles 30, a power unevenness was caused. It was found that the power unevenness appears significantly according to the magnitude of an undulation on the surface of the lens.

The undulation is caused by stress that is applied in a heating process or a process of pasting the electrochromic film 2 to the lens substrate 1 in a procedure of producing the electrochromic element 10. "Undulation" is, for example, a wavy form in which convex portions and concave portions are repeated.

Fig. 4A and Fig. 4B are conceptual views showing the shapes of a front surface 10a and a rear surface 10b of the electrochromic element 10, Fig. 4A shows a comparative example, and Fig. 4B shows an example. In Fig. 4A and Fig. 4B, undulations are shown in an exaggerated manner.

As shown in the comparative example of Fig. 4A, an undulation A has been caused on the front surface 10a. Since the two-dot chain line is an ideal value, actually, the undulation A has been caused to deviate from the ideal value. In the comparative example of Fig. 4A, polishing has been performed to make the rear surface 10b substantially flat. That is, it is possible to make the shape of the rear surface 10b close to the ideal value of the two-dot chain line in Fig. 4A. However, as shown in Fig. 4A, in a form where the front surface 10a undulates and the rear surface 10b is substantially flat, in other words, a form where the front surface 10a deviates from the ideal value and the rear surface 10b is close to the ideal value, a power unevenness is caused. "Power unevenness" refers to a variation in the transmission power. In Fig. 4A, "ideal value" is set to being flat; however, when the front surface and the rear surface are curved surfaces, shapes that follow the curved surfaces are set as the ideal values.

In view of the above-described conventional problem, the present inventors performed intensive studies and consequently reduced apparent undulations and suppressed power unevenness by decreasing the absolute value of the difference between the maximum value and the minimum value of the transmission power to a predetermined range.

Fig. 4B is one example of reducing the apparent undulation. That is, as shown in the example of Fig. 4B, on the front surface 10a of the electrochromic element 10, similar to the comparative example, the undulation A deviating from the ideal value has been caused; however, on the rear surface 10b as well, an undulation B has been formed along the undulation A on the front surface 10a. That is, in the example of Fig. 4B, both the front surface 10a and the rear surface 10b deviate from the ideal value. Therefore, it is possible to reduce the apparent undulation and to make the power unevenness smaller than that in the comparative example of Fig. 4A.

Although not limited, the maximum height undulations (Wz) of the undulations A and B are about 10 µm to 50 µm.

As another form of reducing the undulations, it is also possible to make the absolute value of the difference between the maximum value and the minimum value of the transmission power fall into a predetermined range by making the front surface 10a and the rear surface 10b close to the ideal values shown in Fig. 4B, that is, forming flat or curved surfaces having a small undulation on both the front surface 10a and the rear surface 10b. However, in order to control the undulation A on the front surface 10a to be small, polishing is not possible on the front surface side, and it thus becomes necessary to increase the yield while limiting the conditions of the production process, and the production process is likely to be complicated. Therefore, it is preferable to reduce the apparent undulation by providing the undulation B on the rear surface 10b that follows the undulation A on the front surface 10a as shown in Fig. 4B. Therefore, hereinafter, a form in which the absolute value of the difference between the maximum value and the minimum value of the transmission power is made to be within a predetermined range by undulating both the front surface 10a and the rear surface 10b in the same manner will be described.

### <Detailed Description of Difference Between Maximum Value and Minimum Value of Transmission Power>

In the present embodiment, the absolute value of the difference between the maximum value and the minimum value of the transmission power in all of a 40 mm × 40 mm range at the center of the surface of the electrochromic element is 0.3 D (diopter) or less.

Hereinafter, the difference in transmission power will be described with an experiment.

### [Example 1]

### (1) Fabrication of Electrochromic Film

As shown in Fig. 2A, the electrochromic film 2 having the pair of substrates 3 and 4, the electrode layers 5 and 6 arranged inside of the substrates 3 and 4, and the electrochromic layer 7 interposed between the electrode layers 5 and 6 was prepared. Polycarbonate sheets were used as the substrates 3 and 4, conductive sheets obtained by forming an ITO film by sputtering were used as the electrode layers 5 and 6, and an organic electrochromic material was used for the electrochromic layer 7.

### (2) Preforming

In order to match to the three-dimensional curved surface of an eyeglass lens having a transmission power of 0.00 D, the electrochromic film 2 was preformed into a curved surface shape (refer to Fig. 2B). In the preforming, the electrochromic film 2 was molded using a mold while being heated to match to the form of the lens curved surface.

### (3) Fabrication of Electrochromic Element

Next, as shown in Fig. 2C, the preformed electrochromic film 2 was set in the mold 20 of the injection molding machine, polycarbonate constituting the lens substrate 1 was injected into the mold 20, and the lens substrate 1 was molded, thereby obtaining the electrochromic element 10 (refer to Fig. 2D). It was confirmed that the electrochromic film 2 and the lens substrate 1 adhered to each other without peeling off. As a result of visual observation from the concave surface side of the electrochromic element 10, it was confirmed that there was unnatural warping.

### (4) Measurement of Surface Power Distribution and Polishing Data Creation

The surface reflection power of the electrochromic element 10 was measured using Dual Lensmapper (DLM) manufactured by Automation & Robotics. Fig. 5A is a conceptual view of the surface power distribution (reflection power distribution). The surface power distribution of Fig. 5A is expressed within a 40 mm × 40 mm range at the center of the surface of the electrochromic element 10. Correction polishing data of the rear surface was created using the numerical value of the measured surface power distribution.

### (5) Rear Surface Polishing

The correction polishing data was input to a numerical control (NC) machine, and preform polishing was performed on the rear surface (concave surface) side. An existing technique can be used as a preform polishing method, and for example, a polishing method disclosed in Paragraph [0044] of WO 2009/048124 can be referred to. After the preform polishing, it was confirmed by visual observation that there was no unnatural warping on the rear surface (concave surface) side of the electrochromic element.

### (6) Measurement of Transmission Power

The transmission power of the electrochromic element on which the preform polishing had been performed was measured with Dual Lensmapper (DLM). In the measurement, the transmission power in the 40 mm × 40 mm range at the center of the surface of the electrochromic element was measured, and the maximum value of the transmission power and the minimum value of the transmission power were obtained. In any case of a lens for myopia (minus lens) or a lens for hyperopia (plus lens), the power becomes stronger as the numerical value increases, and the maximum power and the minimum power were thus gathered based not on the magnitude of the number but on the strength of the power. In addition, the absolute value of the difference between the maximum value of the transmission power and the minimum value of the transmission power was calculated. In the experiment, a total of 12 electrochromic elements were fabricated by the same production method as described above, and the maximum value of the transmission power, the minimum value of the transmission power and the difference therebetween (absolute value) were obtained in each electrochromic element. The results thereof are shown in the following Table 1. The unit is D (diopter).

### (7) Method of Measuring Maximum Height Undulation (Wz)

Three-dimensional mapping was performed on the 40 mm × 40 mm range at the center of the surface using Dektak XT-A manufactured by Bruker. The scan pitch at this time was set to 0.1 mm. In measurement data that is not corrected, since the curve shapes of eyeglass lenses overlap each other, the measurement data was corrected so as to be horizontal based on the theoretical value of the lens design, and Wz was then calculated. The results thereof are shown in the following Table 2.

**[Table 1]**

| | Example 1 | | |
|---|---|---|---|
| | Designed transmission power 0.00 D | | |
| | Maximum power | Minimum power | Difference in power |
| n=1 | 0.05 | -0.05 | 0.10 |
| r=2 | 0.20 | 0.05 | 0.15 |
| n=3 | 0.15 | -0.10 | 0.25 |
| n=4 | -0.20 | 0.05 | 0.25 |
| n=5 | -0.15 | 0.00 | 0.15 |
| n=6 | -0.15 | 0.05 | 0.20 |
| n=7 | 0.10 | 0.05 | 0.05 |
| n=8 | 0.15 | -0.10 | 0.25 |
| n=9 | 0.20 | -0.10 | 0.30 |
| n=10 | 0.05 | -0.05 | 0.10 |
| n=11 | -0.15 | 0.05 | 0.20 |
| n=12 | 0.10 | 0.00 | 0.10 |

**[Table 2]**

| | Wz of front surface(µm) | Wz of rear surface (µm) | Absolute value of Wz difference (µm) |
|---|---|---|---|
| n=1 | 11 | 13 | 2 |
| n=2 | 13 | 12 | 1 |
| n=3 | 10 | 14 | 4 |
| n=4 | 12 | 15 | 3 |
| n=5 | 14 | 13 | 1 |
| n=6 | 14 | 12 | 2 |
| n=7 | 13 | 14 | 1 |
| n=8 | 15 | 13 | 2 |
| n=9 | 11 | 14 | 3 |
| n=10 | 14 | 15 | 1 |
| n=11 | 15 | 14 | 1 |
| n=12 | 13 | 14 | 1 |

### [Example 2]

Twelve electrochromic elements were fabricated by the same production method as in Example 1 except that the target power of the spectacle lens to be fabricated was set to 0.00 D to -2.00 D, and the maximum value of the transmission power, the minimum value of the transmission power and the difference therebetween (absolute value) were obtained in each electrochromic element. The results thereof are shown in the following Table 3. The unit is D (diopter). The measurement results of the maximum height undulation (Wz) are shown in Table 4.

**[Table 3]**

| | Example 2 | | |
|---|---|---|---|
| | Designed transmission power-2.00 D | | |
| | Maximum power | Minimum power | Difference in power |
| n=1 | -2.05 | -1.95 | 0.10 |
| n=2 | -2.20 | -1.95 | 0.25 |
| n=3 | -2.00 | -1.85 | 0.15 |
| n=4 | -2.25 | -1.95 | 0.30 |
| n=5 | -2.10 | -2.00 | 0.10 |
| n=6 | -2.05 | -2.00 | 0.05 |
| n=7 | -2.00 | -1.95 | 0.05 |
| n=8 | -2.00 | -2.00 | 0.00 |
| n=9 | -1.95 | -1.95 | 0.00 |
| n=10 | -2.10 | -2.00 | 0.10 |
| n=11 | -2.20 | -1.95 | 0.25 |
| n=12 | -2.00 | -1.95 | 0.05 |

**[Table 4]**

| | Wz of front surface(µm) | Wz of rear surface (µm) | Absolute value of Wz difference (µm) |
|---|---|---|---|
| n=1 | 17 | 16 | 1 |
| n=2 | 16 | 16 | 0 |
| n=3 | 15 | 17 | 2 |
| n=4 | 14 | 15 | 1 |
| n=5 | 15 | 18 | 3 |
| n=6 | 16 | 19 | 3 |
| n=7 | 17 | 18 | 1 |
| n=8 | 17 | 19 | 2 |
| n=9 | 15 | 17 | 2 |
| n=10 | 16 | 16 | 0 |
| n=11 | 18 | 17 | 1 |
| n=12 | 18 | 17 | 1 |

### [Example 3]

Twelve electrochromic elements were fabricated by the same production method as in Example 1 except that the target power of the spectacle lens to be fabricated was set to 0.00 D to -4.00 D, and the maximum value of the transmission power, the minimum value of the transmission power and the difference therebetween (absolute value) were obtained in each electrochromic element. The results thereof are shown in the following Table 5. The unit is D (diopter). The measurement results of the maximum height undulation (Wz) are shown in Table 6.

**[Table 5]**

| | Example 3 | | |
|---|---|---|---|
| | Designed transmission power-4.00 D | | |
| | Maximum power | Minimum power | Difference in power |
| n=1 | -4.25 | -4.00 | 0.25 |
| n=2 | -4.00 | -3.95 | 0.05 |
| n=3 | -4.15 | -4.00 | 0.15 |
| n=4 | -4.25 | -3.95 | 0.30 |
| n=5 | -4.10 | -4.00 | 0.10 |
| n=6 | -4.20 | -4.10 | 0.10 |
| n=7 | -4.15 | -3.85 | 0.30 |
| n=8 | -3.95 | -3.90 | 0.05 |
| n=9 | -4.00 | -3.80 | 0.20 |
| n=10 | -4.05 | -3.85 | 0.20 |
| n=11 | -4.00 | -3.95 | 0.05 |
| n=12 | -4.00 | -3.95 | 0.05 |

**[Table 6]**

| | Wz of front surface(µm) | Wz of rear surface(µm) | Absolute value of Wz difference (µm) |
|---|---|---|---|
| n=1 | 43 | 44 | 1 |
| n=2 | 37 | 43 | 6 |
| n=3 | 42 | 42 | 0 |
| n=4 | 43 | 38 | 5 |
| n=5 | 39 | 39 | 0 |
| n=6 | 38 | 40 | 2 |
| n=7 | 39 | 41 | 2 |
| n=8 | 39 | 40 | 1 |
| n=9 | 38 | 42 | 4 |
| n=10 | 37 | 43 | 6 |
| n=11 | 38 | 44 | 6 |
| n=12 | 41 | 43 | 2 |

### [Example 4]

Twelve electrochromic elements were fabricated by the same production method as in Example 1 except that the target power of the spectacle lens to be fabricated was set to 0.00 D to +4.00 D, and the maximum value of the transmission power, the minimum value of the transmission power and the difference therebetween (absolute value) were obtained in each electrochromic element. The results thereof are shown in the following Table 7. The unit is D (diopter). The measurement results of the maximum height undulation (Wz) are shown in Table 8.

**[Table 7]**

| | Example 4 | | |
|---|---|---|---|
| | Designed transmission power +4.00 D | | |
| | Maximum power | Minimum power | Difference in power |
| n=1 | 4.05 | 3.95 | 0.10 |
| n=2 | 4.00 | 3.95 | 0.05 |
| n=3 | 4.20 | 3.90 | 0.30 |
| n=4 | 4.15 | 4.00 | 0.15 |
| n=5 | 4.15 | 4.10 | 0.05 |
| n=6 | 4.00 | 3.95 | 0.05 |
| n=7 | 4.00 | 3.80 | 0.20 |
| n=8 | 4.05 | 3.95 | 0.10 |
| n=9 | 4.10 | 3.95 | 0.15 |
| n=10 | 4.00 | 3.95 | 0.05 |
| n=11 | 4.05 | 4.00 | 0.05 |
| n=12 | 4.20 | 3.90 | 0.30 |

**[Table 8]**

| | Wz of front surface(µm) | Wz of rear surface (µm) | Absolute value of Wz difference (µm) |
|---|---|---|---|
| n=1 | 45 | 43 | 2 |
| n=2 | 44 | 45 | 1 |
| n=3 | 38 | 46 | 8 |
| n=4 | 47 | 44 | 3 |
| n=5 | 45 | 45 | 0 |
| n=6 | 50 | 43 | 7 |
| n=7 | 49 | 44 | 5 |
| n=8 | 47 | 44 | 3 |
| n=9 | 42 | 45 | 3 |
| n=10 | 47 | 45 | 2 |
| n=11 | 45 | 46 | 1 |
| n=12 | 38 | 42 | 4 |

### [Comparative Example 1]

Twelve electrochromic elements were fabricated by the same production method as in Example 1 except that the target power of the spectacle lens to be fabricated was set to 0.00 D to -4.00 D, the process (4) of Example 1 was skipped, and polishing data that was not based on the numerical value of the surface power distribution and was not corrected was used, and the maximum value of the transmission power, the minimum value of the transmission power and the difference therebetween (absolute value) were obtained in each electrochromic element. The results thereof are shown in the following Table 9. The unit is D (diopter). The measurement results of the maximum height undulation (Wz) are shown in Table 10.

**[Table 9]**

| | Comparative Example 1 | | |
|---|---|---|---|
| | Designed transmission power -4.00 D | | |
| | Maximum power | Minimum power | Difference in power |
| n=1 | -4.50 | -3.80 | 0.70 |
| n=2 | -4.00 | -3.65 | 0.35 |
| n=3 | -4.50 | -4.10 | 0.40 |
| n=4 | -4.15 | -3.70 | 0.45 |
| n=5 | 4.20 | -3.80 | 0.40 |
| n=6 | -4.60 | -4.20 | 0.40 |
| n=7 | -5.00 | -4.05 | 0.95 |
| n=8 | -4.05 | -3.70 | 0.35 |
| n=9 | -4.10 | -3.50 | 0.60 |
| n=10 | -4.05 | -3.50 | 0.55 |
| n=11 | -3.95 | -3.50 | 0.45 |
| n=12 | -4.50 | -4-15 | 0.35 |

**[Table 10]**

| | Wz of front surface(µm) | Wz of rear surface(µm) | Absolute value of Wz difference (µm) |
|---|---|---|---|
| n=1 | 43 | 2 | 41 |
| n=2 | 45 | 1 | 44 |
| n=3 | 44 | 3 | 41 |
| n=4 | 43 | 2 | 41 |
| n=5 | 42 | 1 | 41 |
| n=6 | 41 | 2 | 39 |
| n=7 | 43 | 2 | 41 |
| n=8 | 44 | 5 | 39 |
| n=9 | 45 | 3 | 42 |
| n=10 | 43 | 2 | 41 |
| n=11 | 44 | 2 | 42 |
| n=12 | 43 | 2 | 41 |

### [Comparative Example 2]

Twelve electrochromic elements were fabricated by the same production method as in Example 1 except that the target power of the spectacle lens to be fabricated was set to 0.00 D to +4.00 D, the process (4) of Example 1 was skipped, and polishing data that was not based on the numerical value of the surface power distribution and was not corrected was used, and the maximum value of the transmission power, the minimum value of the transmission power and the difference therebetween (absolute value) were obtained in each electrochromic element. The results thereof are shown in the following Table 11. The unit is D (diopter). The measurement results of the maximum height undulation (Wz) are shown in Table 12.

**[Table 11]**

| | Comparative Example 2 | | |
|---|---|---|---|
| | Designed transmission power +4.00 D | | |
| | Maximum power | Minimum power | Difference in power |
| n=1 | 4.20 | 3.80 | 0.40 |
| n=2 | 4.40 | 4.05 | 0.35 |
| n=3 | 4.20 | 3.70 | 0.50 |
| n=4 | 4.50 | 4.10 | 0.40 |
| n=5 | 4.30 | 3.80 | 0.50 |
| n=6 | 4.05 | 3.60 | 0.45 |
| n=7 | 4.15 | 3.80 | 0.35 |
| n=8 | 4.05 | 3.50 | 0,55 |
| n=9 | 5.00 | 3.95 | 1.05 |
| n=10 | 4.25 | 3.90 | 0.35 |
| n=11 | 4.20 | 3.65 | 0.55 |
| n=12 | 4.15 | 3.65 | 0.50 |

**[Table 12]**

| | Wz of front surface(µm) | Wz of rear surface(µm) | Absolute value of Wz difference (µm) |
|---|---|---|---|
| n=1 | 44 | 2 | 42 |
| n=2 | 45 | 1 | 44 |
| n=3 | 46 | 4 | 42 |
| n=4 | 44 | 3 | 41 |
| n=5 | 44 | 4 | 40 |
| n=6 | 45 | 4 | 41 |
| n=7 | 44 | 3 | 41 |
| n=8 | 46 | 3 | 43 |
| n=9 | 45 | 4 | 41 |
| n=10 | 43 | 3 | 40 |
| n=11 | 45 | 3 | 42 |
| n=12 | 44 | 4 | 40 |

### [Experiment Results]

As shown in Table 1, Table 3, Table 5 and Table 7, in Example 1 to Example 4, the absolute values of the difference between the maximum value and the minimum value of the transmission power in all of the 40 mm × 40 mm range at the center of the surface of the electrochromic elements were 0.30 D or less.

In addition, as shown in Table 2, Table 4, Table 6 and Table 8, it was found that, in Example 1 to Example 4, it was possible to suppress the front and rear differences in the maximum height undulation (Wz) to 20 µm or less and preferably 10 µm or less.

On the other hand, as shown in Table 9 and Table 11, in Comparative Example 1 and Comparative Example 2, the absolute values of the difference between the maximum value and the minimum value of the transmission power became larger than 0.30 D. In addition, as shown in Table 10 and Table 12, in Comparative Example 1 and Comparative Example 2, the front and rear differences in the maximum height undulation (Wz) were about 40 µm or more.

In the present examples, the surface power distributions of the electrochromic elements were measured (refer to Fig. 5A), and the rear surfaces of the lens substrates on the side opposite to the side on which the electrochromic film was arranged were polished on the basis of the measurement results. Therefore, even in the examples, the surfaces of the electrochromic films had an undulation, but the rear surfaces also undulated along the shapes of the surfaces, which made it possible to reduce the apparent undulation. As a result, it was possible to make the absolute values of the difference between the maximum value and the minimum value of the transmission power smaller than those in the comparative examples. Fig. 5B is a conceptual view of the transmission power distribution. In Fig. 5B, the transmission power distribution in the lens for spectacles 30 is shown. It is found that, as a whole, it was possible to suppress a variation in the transmission power.

On the basis of the above experiment results, the absolute values of the difference between the maximum value and the minimum value of the transmission power being 0.30 D or less were considered to correspond to the examples. It was found that, when the absolute value is 0.30 D or less, there is no unnatural warping on the rear surface (concave surface) side when visually observed and the electrochromic elements can be applied as spectacle lenses. On the other hand, it was found that, in the comparative examples, unnatural warping was shown and the electrochromic elements could not be applied as spectacle lenses.

The reason for setting the absolute value of the difference between the maximum value and the minimum value of the transmission power to 0.30 D or less is on the basis of the refractive power tolerance of ophthalmic optics-uncut finished spectacle lenses-specifications for single-vision lenses of JIS T 7313. From the viewpoint of the design of a spectacle lens, the central power needs to satisfy the tolerance of the JIS standards and was thus set to 0.30 D or less. The central power is preferably 0.25 D or less.

### <Characteristic Configuration of Present Embodiment>

The electrochromic element 10 of the present embodiment is the electrochromic element 10 in which the lens substrate 1 and the electrochromic film 2 are laminated together, in which the absolute value of the difference between the maximum value and the minimum value of the transmission power in all of the 40 mm × 40 mm range at the center of the surface is 0.30 D or less. This makes it possible to reduce the apparent undulation and to enhance the uniformity of the power distribution.

In the present embodiment, it is preferable that the absolute value of the difference between the maximum value and the minimum value of the transmission power in all of the 40 mm × 40 mm range at the center of the surface is 0.15 D or less. According to the above-described experiment, a number of samples having an absolute value of 0.15 D or less were shown in Example 1 to Example 4. As described above, in the present embodiment, it is also possible to control the absolute value to be 0.15 D or less, and to further enhance the uniformity of the power distribution.

The present embodiment is the electrochromic element 10 in which the lens substrate 1 and the electrochromic film 2 are laminated together, in which the surface of the electrochromic film 2 has an undulation, and the rear surface of the lens substrate 1 undulates along the shape of the surface. That is, as shown in the schematic view of Fig. 4B, since the front surface 10a and the rear surface 10b undulate in substantially the same shape, the absolute value of the difference between the maximum value and the minimum value of the transmission power in all of the 40 mm × 40 mm range at the center of the surface can be adjusted to be 0.30 D or less, and the apparent undulation can be reduced.

In the present embodiment, it is preferable that the rear surface of the lens substrate 1 is polished to undulate along the shape of the surface. As shown in the "(4) Measurement of Surface Power Distribution and Polishing Data Creation" and the "(5) Rear Surface Polishing" of the above-described experiment, when the rear surface is polished using the correction polishing data created using the numerical values of the surface power distribution, it is possible to perform polishing so that the rear surface undulates along the shape of the surface as shown in the schematic view of Fig. 4B.

In the present embodiment, it is preferable that the electrochromic film 2 is arranged on the convex surface of the lens substrate 1 and the concave surface on the side opposite to the convex surface has been polished. This makes it possible to appropriately and easily polish the rear surface to undulate along the shape of the surface as shown in the schematic view of Fig. 4B.

In the lens for spectacles 30 in the present embodiment, the electrochromic element 10 described above is used. In addition, in the spectacles 32 in the present embodiment, a plurality of the lenses for spectacles 30 is used. The electrochromic element 10 of the present embodiment is capable of making the power unevenness smaller than ever and can be thus effectively applied to lenses for spectacles, is capable of making the power difference between the right and left lenses small, and enables users to use spectacles with no discomfort.

The present embodiment is a method of producing the electrochromic element 10 in which the lens substrate 1 and the electrochromic film 2 are laminated together, in which the surface power distribution of the electrochromic element 10 is measured, and the rear surface of the lens substrate 1 on the side opposite to the side on which the electrochromic film 2 is arranged is polished on the basis of the measurement result thereof. This makes it possible to reduce the apparent undulation and to easily adjust the absolute value of the difference between the maximum value and the minimum value of the transmission power in all of the 40 mm × 40 mm range at the center of the surface to be 0.30 D or less.

In the present embodiment, it is preferable that the surface power distribution is measured with the reflection power, the polished shape relative to the rear surface is measured on the basis of the reflection power distribution, and the rear surface is polished in accordance with the polished shape. This makes it possible to polish the rear surface to undulate along the shape of the surface as shown in the schematic view of Fig. 4B.

In the present embodiment, it is possible to perform polishing so that the absolute value of the difference between the maximum value and the minimum value of the transmission power in all of the 40 mm × 40 mm range at the center of the surface becomes 0.30 D or less.

In addition, in the present embodiment, it is preferable that the production method has the process of forming the electrochromic element 10, the process of arranging the electrochromic film 2 in the mold 20 to injection-mold the lens substrate 1, the process of measuring the surface power distribution of the electrochromic element 10, and the process of polishing the rear surface based on the measurement result of the surface power distribution. That is, as shown in Fig. 2C, in the present embodiment, the electrochromic film 2 is arranged in the mold 20 to injection-mold the lens substrate **1,** but such a process makes the surface of the electrochromic film 2 likely to undulate. Conventionally, in the subsequent rear surface-polishing process, the rear surface was polished by an existing preform polishing method. However, in the present embodiment, the surface power distribution is measured, and the rear surface is then polished on the basis of the measurement result of the surface power distribution, whereby both the rear surface and the front surface are capable of forming the same undulation, and it is possible to reduce the apparent undulation. This makes it possible to precisely and easily produce an electrochromic element having a highly uniform power distribution.

### <Applications>

Although applications of the electrochromic element of the present embodiment are not limited, the electrochromic element can be preferably applied to a light control lens for spectacles.

The electrochromic element of the present embodiment may be applied to those other than the lens for spectacles. Examples thereof include electrochromic light control devices and anti-glare mirrors.

### [Industrial Applicability]

The electrochromic element of the present invention is capable of reducing the undulation more than it seems and capable of making the power unevenness small. This makes it possible to preferably apply the electrochromic element to lenses for spectacles and to prevent warping in the field of vision at the time of wearing spectacles.

This application is based on Japanese Patent Application No. 2022-074757 applied on April 28, 2022. All of this content is included here.

## Claims

1. An electrochromic element in which a lens substrate and an electrochromic film are laminated together,
wherein an absolute value of a difference between a maximum value and a minimum value of a transmission power in all of a 40 mm × 40 mm range at a center of a surface is 0.30 D or less.

2. The electrochromic element according to claim **1,** wherein the absolute value of the difference between the maximum value and the minimum value of the transmission power in all of the 40 mm × 40 mm range at the center of the surface is 0.15 D or less.

3. An electrochromic element in which a lens substrate and an electrochromic film are laminated together,
wherein a surface of the electrochromic film has an undulation, and
a rear surface of the lens substrate on a side opposite to a surface on which the electrochromic element is arranged undulates along a shape of the surface.

4. The electrochromic element according to any one of claims 1 to 3, wherein the rear surface of the lens substrate on the side opposite to the side on which the electrochromic film is arranged is polished to undulate along the shape of the surface.

5. The electrochromic element according to claim 4, wherein the electrochromic film is arranged on a convex surface of the lens substrate and a concave surface on a side opposite to the convex surface has been polished.

6. A lens for spectacles, wherein the electrochromic element according to claim 1 is used.

7. Spectacles, wherein a plurality of the lenses for spectacles according to claim 6 is used.

8. A method of producing an electrochromic element in which a lens substrate and an electrochromic film are laminated together,
wherein a surface power distribution of the electrochromic element is measured, and a rear surface of the lens substrate on a side opposite to a side on which the electrochromic film is arranged is polished on the basis of a measurement result thereof.

9. The method of producing the electrochromic element according to claim 8, wherein the surface power distribution is measured with a reflection power, a polished shape relative to the rear surface is measured on the basis of a reflection power distribution, and the rear surface is polished in accordance with the polished shape.

10. The method of producing the electrochromic element according to claim 8 or 9, wherein polishing is performed so that an absolute value of a difference between a maximum value and a minimum value of a transmission power in all of a 40 mm × 40 mm range at a center of a surface becomes 0.30 D or less.

11. The method of producing the electrochromic element according to claim 8 or 9, the method comprising:
a process of forming the electrochromic element;
a process of arranging the electrochromic element in a mold to injection-mold the lens substrate;
a process of measuring a surface power distribution of the electrochromic element; and
a process of polishing the rear surface based on a measurement result of the surface power distribution.
